(19) **Europäisches Patentamt**
**European Patent Office**
**Office européen des brevets**

(11) **EP 3 370 379 A1**

(12) **EUROPEAN PATENT APPLICATION**
published in accordance with Art. 153(4) EPC

(43) Date of publication:
**05.09.2018 Bulletin 2018/36**

(51) Int Cl.:
***H04L 27/26*** (2006.01)

(21) Application number: **15906999.6**

(86) International application number:
**PCT/CN2015/093371**

(22) Date of filing: **30.10.2015**

(87) International publication number:
**WO 2017/070936 (04.05.2017 Gazette 2017/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fujitsu Limited**
**Kawasaki-shi, Kanagawa 211-8588 (JP)**

(72) Inventors:
• **YANG, Fan**
**Beijing 100025 (CN)**
• **WANG, Xin**
**Beijing 100025 (CN)**
• **WU, Jianming**
**Beijing 100025 (CN)**

(74) Representative: **Haseltine Lake LLP**
**Lincoln House, 5th Floor**
**300 High Holborn**
**London WC1V 7JH (GB)**

(54) **MULTI-CARRIER MODULATION APPARATUS AND MULTI-CARRIER DEMODULATION APPARATUS, METHOD AND SYSTEM**

(57) Embodiments of this disclosure provide a multicarrier modulation apparatus and method, a multicarrier demodulation apparatus and method and a system. In the embodiments of this disclosure, a new semi-orthogonal multicarrier waveform is designed for data modulation, odd-numbered subcarriers and even-numbered subcarriers of the waveform being respectively orthogonal to each other, but odd-numbered and even-numbered carriers being not orthogonal to each other. In comparison with legacy orthogonal frequency division multiplexing (OFDM) multicarrier, a subcarrier spacing of such multicarrier signal is halved. Hence, the spectral efficiency is doubled.

**1501**
multiple modulation symbols of data to be transmitted are modulated onto part or all of subcarriers of multiple subcarriers; wherein, a subcarrier spacing between subcarriers of the multiple subcarriers is a reciprocal of 2 times of a symbol duration

**1502**
data on the subcarriers are added up, so as to obtain modulated data of the data to be transmitted

**1503**
detection result information fed back by a receiver is received

**1504**
the multiple modulation symbols of the data to be transmitted are modulated onto part or all of subcarriers of complementary subcarriers of the multiple subcarriers

**1505**
data on the complementary subcarriers are added up, so as to obtain complementary modulated data of the data to be transmitted

**Fig. 15**

EP 3 370 379 A1

**Description**

Field

This disclosure relates to the field of communications technologies, and in particular to a multicarrier modulation apparatus and method, a multicarrier demodulation apparatus and method and a system.

Background

Multicarrier modulation (MCM) employs multiple carrier signals. It decomposes a data stream into a number of sub-data streams, so that the sub-data streams have much lower transmission bit rates, and these data are used to respectively modulate a number of carriers. Therefore, in a multicarrier modulation channel, the data transmission rate is relatively low, and the symbol period is lengthened. As long as the delay spread is smaller than the symbol period by a certain ratio, no inter-code interference will be resulted. Hence, multicarrier modulation is insensitive to the time dispersion of the channel. The multicarrier modulation may be implemented in multiple ways, such as multitone realization, orthogonal multicarrier modulation (orthogonal frequency division multiplexing, OFDM), MC-CDMA (multicarrier-code division multiple access (CDMA) and coded MCM. Among them, OFDM can overcome multipath-fading interference and is a hot topic in current research.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In an OFDM system, the sub-carriers are orthogonal to each other, thereby limiting improvement of the spectral efficiency.

Embodiments of this disclosure provide a multicarrier modulation apparatus and method, and a system, so as to improve spectral efficiency.

According to a first aspect of the embodiments of this disclosure, there is provided a multicarrier modulation apparatus, including:

a first modulating unit configured to modulate multiple modulation symbols of data to be transmitted onto part or all of subcarriers of multiple subcarriers; wherein, a subcarrier spacing between subcarriers of the multiple subcarriers is a reciprocal of a predefined multiple of a symbol duration, the predefined multiple being greater than 1; and
a first calculating unit configured to add up data on the subcarriers, to obtain modulated data of the data to be transmitted.

According to a second aspect of the embodiments of this disclosure, there is provided a multicarrier demodulation apparatus, including:

a first filtering unit configured to filter first reception data, to obtain demodulated data to which subcarriers correspond; wherein, a subcarrier spacing between subcarriers of the multiple subcarriers is a reciprocal of a predefined multiple of a symbol duration, the predefined multiple being greater than 1; and
a first processing unit configured to process the demodulated data to which the subcarriers correspond, to obtain demodulated data with no inter-subcarrier-interference.

According to a third aspect of the embodiments of this disclosure, there is provided a transmitter, including the apparatus as described in the first aspect.

According to a fourth aspect of the embodiments of this disclosure, there is provided a receiver, including the apparatus as described in the second aspect.

According to a fifth aspect of the embodiments of this disclosure, there is provided a multicarrier communications system, including a transmitter and a receiver; wherein,
the transmitter is configured to:

modulate multiple modulation symbols of data to be transmitted onto part or all of subcarriers of multiple subcarriers, and add up data on the subcarriers, to obtain modulated data of the data to be transmitted; wherein, a subcarrier spacing between subcarriers of the multiple subcarriers is a reciprocal of a predefined multiple of a symbol duration, the predefined multiple being greater than 1;

and the receiver is configured to:
filter first reception data, to obtain demodulated data to which subcarriers correspond, and process the demodulated data to which the subcarriers correspond, to obtain demodulated data with no inter-subcarrier-interference.

According to a sixth aspect of the embodiments of this disclosure, there is provided a multicarrier modulation method, including:

modulating multiple modulation symbols of data to be transmitted onto part or all of subcarriers of multiple subcarriers; wherein, a subcarrier spacing between subcarriers of the multiple subcarriers is a reciprocal of a predefined multiple of a symbol duration, the predefined multiple being greater than 1; and
adding up data on the subcarriers, to obtain modulated data of the data to be transmitted.

According to a seventh aspect of the embodiments of this disclosure, there is provided a multicarrier demodulation method, including:

filtering first reception data, to obtain demodulated data to which subcarriers correspond; wherein, a subcarrier spacing between subcarriers of the multiple subcarriers is a reciprocal of a predefined multiple of a symbol duration, the predefined multiple being greater than 1; and
processing the demodulated data to which the subcarriers correspond, to obtain demodulated data with no inter-subcarrier-interference.

An advantage of the embodiments of this disclosure exists in that a new semi-orthogonal frequency division multiplexing (SOFDM) multicarrier is used for data modulation, and in comparison with legacy orthogonal frequency division multiplexing (OFDM) multicarrier, a subcarrier spacing of such SOFDM multicarrier signal is halved. Hence, with identical effective bandwidths, the number of the subcarriers is doubled, while when identical numbers of subcarriers are used, the effective bandwidth is a half of the original. Thus, with the embodiments of this disclosure, spectral efficiency is improved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of a structure of a multicarrier modulation apparatus of an embodiment of this disclosure;
FIG. 2 is a schematic diagram of a spectrum of an OFDM system;
FIG. 3 is a schematic diagram of a spectrum of an SOFDM system;
FIG. 4 is a schematic diagram of an implementation of modulating data to be transmitted of the embodiment of this disclosure;
FIG. 5 is a schematic diagram of another implementation of modulating data to be transmitted of the embodiment of this disclosure;
FIG. 6 is a schematic diagram of a structure of a multicarrier demodulation apparatus of an embodiment of this disclosure;
FIG. 7 is a schematic diagram of an implementation of demodulating reception data of the embodiment of this disclosure;
FIG. 8 is a schematic diagram of another implementation of demodulating reception data of the embodiment of this disclosure;

FIG. 9 is a schematic diagram of performing data demodulation by using original SOFDM signals and complementary SOFDM signals;

FIG. 10 is a schematic diagram of an implementation of the embodiment shown in FIG. 9;

FIG. 11 is a schematic diagram of another implementation of the embodiment shown in FIG. 9;

FIG. 12 is a schematic diagram of a hardware structure of a transmitter of an embodiment;

FIG. 13 is a schematic diagram of a hardware structure of a receiver of an embodiment;

FIG. 14 is a schematic diagram of a hardware structure of a multicarrier communications system of an embodiment;

FIG. 15 is a flowchart of a multicarrier modulation method of an embodiment; and

FIG. 16 is a flowchart of a multicarrier demodulation method of an embodiment.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. The various embodiments of the present disclosure will be described below with reference to the accompanying drawings. These embodiments are only exemplary and are not limitations of the present disclosure.

Embodiment 1

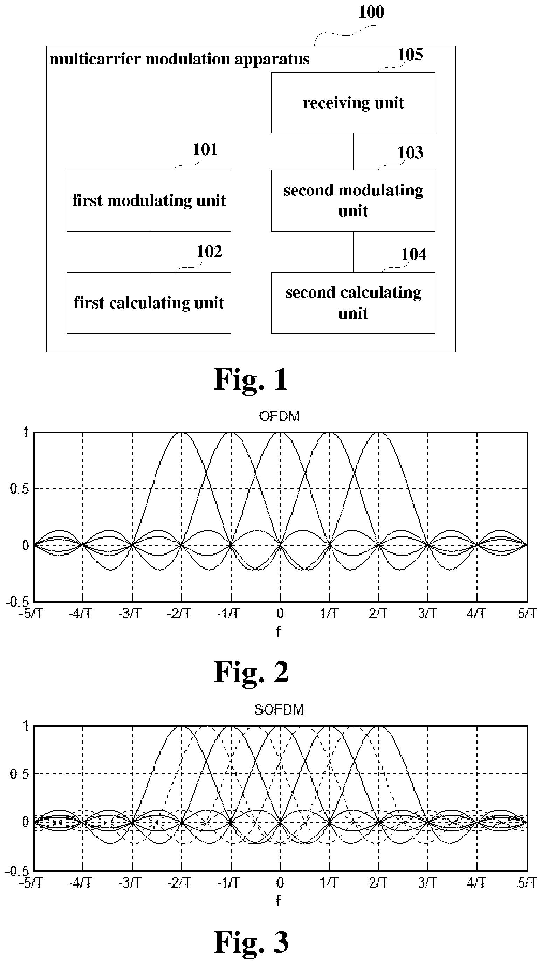

This embodiment provides a multicarrier modulation apparatus, applicable to a transmitter end of a multi-carrier communications system. FIG 1 is a schematic diagram of a structure of the apparatus. As shown in FIG 1, the apparatus 100 includes a first modulating unit 101 and a first calculating unit 102.

The first modulating unit 101 is configured to modulate multiple modulation symbols of data to be transmitted onto part or all of subcarriers of multiple subcarriers; wherein, a subcarrier spacing between subcarriers of the multiple subcarriers is a reciprocal of a predefined multiple of a symbol duration, the predefined multiple being greater than 1.

And the first calculating unit 102 is configured to add up data on the subcarriers, so as to obtain modulated data of the data to be transmitted.

In this embodiment, the predetermined multiple is, for example, 1.5 times, 2 times, 4 times, or 8 times, and the like. In this embodiment, the predetermined multiple being two times is taken as an example. However, those skilled in the art may derive implementations of other multiples according to the implementation of this embodiment, and the implementations of other multiples shall not be described here in detail.

In this embodiment, a new semi-orthogonal frequency division multiplexing (SOFDM) multicarrier waveform is designed. In the SOFDM, a subcarrier spacing between subcarriers of the multiple subcarriers is a reciprocal of 2 times of a symbol duration. FIG. 2 is a schematic diagram of a spectrum of a legacy OFDM system, and FIG. 3 is a schematic diagram of a spectrum of an SOFDM system of this embodiment. As shown in FIG. 3, in this embodiment, the subcarriers

$$s_k(t) = \sqrt{\frac{1}{T}} e^{j2\pi k \Delta f t} \left( k \in Z, 0 < t < T \right);$$

may be expressed as: where, Z denotes integer domain, k is an index of a subcarrier, T is a symbol duration, and $\Delta f$ is a subcarrier spacing (with a unit of Hz). In this embodiment, $\Delta f = \frac{1}{2T}$,

and in comparison with the legacy OFDM $(\Delta f = \frac{1}{T})$, subcarrier spacing is halved.

In this embodiment, as shown in FIG. 2 and FIG. 3, in the SOFDM system, the orthogonality among the subcarriers is broken, but the odd-numbered subcarriers of the multiple subcarriers of the SOFDM system are still orthogonal to each other. Likewise, the even-numbered subcarriers of the multiple subcarriers are also orthogonal to each other. Hence, the SOFDM system of this embodiment may be referred to as a semi-orthogonal frequency division multiplexing system.

In this embodiment, multiple modulation symbols of the data to be transmitted may be modulated onto all subcarriers of the multiple subcarriers, or may be modulated onto a part of the subcarriers of the multiple subcarriers. In this embodiment, the multiple subcarriers may be divided into basic subcarriers and backup subcarriers. The basic subcarriers are used to carry data, and the backup subcarriers carry data only in need, such as when there exists a service requirement or channel conditions permit. In this embodiment, multiple modulation symbols of the data to be transmitted may be modulated onto all the subcarriers of the multiple subcarriers, and both the basic subcarriers and the back-up subcarrier carry data. Of course, the multiple modulation symbols of the data to be transmitted may also be modulated on the basic subcarriers and a part of the backup subcarriers of the multiple subcarriers, and the basic subcarriers and the part of the backup subcarriers carry data, thus, spectrum efficiency may be improved to different extents.

In one implementation, a type of subcarriers orthogonal to each other in the multiple subcarriers are used as basic subcarriers, and another type of subcarriers are used as backup subcarriers. For example, odd-numbered subcarriers or even-numbered subcarriers of the multiple subcarriers are used as basic subcarriers, and even-numbered subcarriers or odd-numbered subcarriers of the multiple subcarriers are used as backup subcarriers.

It is assumed that the multicarrier system includes 8 subcarriers, in which a first, 3rd, 5th, and 7th subcarriers are basic subcarriers, and 2nd, 4th, 6th, and 8th subcarriers are back-up subcarriers. The first, 3rd, 5th, and 7th basic subcarriers carry data all the time, while the 2nd, 4th, 6th, and 8th backup subcarriers carry data only in need. Therefore, when all the current even-numbered subcarriers transmit data, improvement of a capacity of 100% may be achieved in comparison with the OFDM system having only four subcarriers; when only the 2nd and 4th sub-carriers in 4 even-numbered subcarriers transmit data, improvement of a capacity of 50% may be achieved. When the even-numbered subcarriers do not carry data, the capacity is increased by 0%. And at this moment, it turns back to an OFDM system.

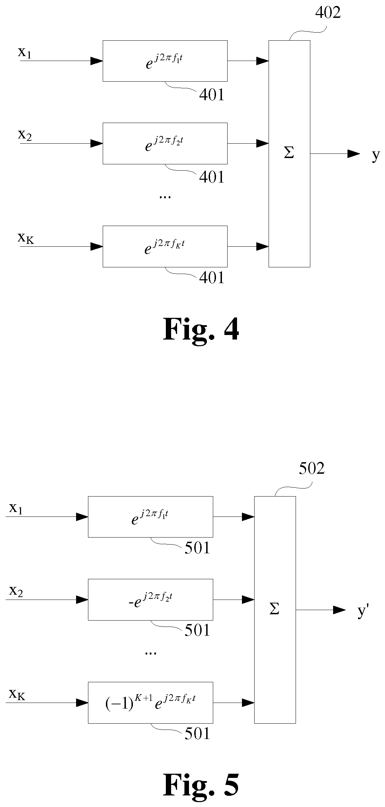

In this embodiment, the first modulating unit 101 may be implemented by multiple subcarrier modulators (a subcarrier modulator group), and the first calculating unit 102 may be implemented by an adder. FIG. 4 is a schematic diagram of a transmitter end of the SOFDM system of this embodiment. As shown in FIG 4, for multiple modulation symbols $x_1$-$x_K$ (K is the total number of subcarriers) of the data to be transmitted, multiple subcarrier modulators 401 multiply them by the subcarriers of the SOFDM system, thereby modulating them onto the multiple subcarriers of the SOFDM system of this embodiment. Here, 0<t<T, that is, there exist signals on the carriers between 0 and T, while there exists no signal on the carriers outside of 0 to T. The adder 402 adds up the data on the subcarriers to obtain modulated data y of the data to be transmitted; wherein, y may be expressed as:

$$y = \sqrt{\frac{1}{T}} \sum_{k=1}^{K} x_k \cdot e^{j2\pi f_k t} , \quad f_k = \frac{k}{2T} .$$

In the example in FIG. 4, multiple modulation symbols of the data to be transmitted being modulated onto all the subcarriers of multiple subcarriers is taken as an example. However, as described above, in this embodiment, the multiple modulation symbols of the data to be transmitted may also be modulated onto a part of subcarriers of the multiple subcarriers. At this moment, a modulation symbol corresponding to some subcarriers is 0, that is, there exists no signal on these subcarriers, and these subcarriers do not carry data.

In another implementation of this embodiment, as shown in FIG. 1, the apparatus 100 may further include: a second modulating unit 103 and a second calculating unit 104. The second modulating unit 103 is configured to modulate the multiple modulation symbols of the data to be transmitted onto part or all of subcarriers of complementary subcarriers of the multiple subcarriers, and the second calculating unit 104 is configured to add up data on the complementary subcarriers, so as to obtain complementary modulated data of the data to be transmitted.

In this implementation, in order to construct a multicarrier system with no inter-subcarrier-interference, complementary subcarriers of multiple subcarriers of the SOFDM may further be used to modulate multiple modulation symbols of the data to be transmitted. Hence, at a receiver end, the multicarrier system with no inter-subcarrier-interference may be constructed by adding up signals of them (signals after being performed original subcarrier modulation and signals after being performed complementary subcarrier modulation) after being filtered.

In a variant of this implementation, as shown in FIG. 1, the apparatus 100 may further include a receiving unit 105 configured to receive detection result information on data to be transmitted fed back by a receiver. And when the receiving unit 105 receives information on failure of detection of a certain data to be transmitted, the second modulating unit 103 may further modulate the multiple modulation symbols of the data to be transmitted onto part or all of subcarriers of the complementary subcarriers of the multiple subcarriers, a manner of modulation being as described above, and being not gong be described herein any further. In this variant, the receiving unit 105 may be implemented by software or hardware, such as being implemented by a receiving module. And in this variant, the second calculating unit 104 may add up the data on the complementary subcarriers, so as to obtain the complementary modulated data of the data to be transmitted.

In this variant, after each of the data to be transmitted is detected, the receiver end may feed back signaling of whether the detection is successful to the transmitter end, and the transmitter end may transmit a complementary signal of a data to be transmitted failed in the detection after receiving signaling of detection failure. And the apparatus 100 of this embodiment may perform multicarrier modulation on the data to be transmitted failed in the detection via the second modulating unit 103 and the second calculating unit 104, and hence, the transmitter end may transmit the modulated data to be transmitted (a complementary modulated data of the data to be transmitted) for further detection and reception by the receiver end. Processing at the receiver end shall be described in the following embodiment.

In this implementation, the second modulating unit 103 may be implemented by multiple subcarrier modulators, and the second calculating unit may be implemented by an adder. FIG. 5 is a schematic diagram of a transmitter end of the complementary SOFDM system. As shown in FIG. 5, for the multiple modulation symbols $x_1$-$x_K$ (K is the total number of subcarriers) of the data to be transmitted that failed in the detection, multiple subcarrier modulators 501 multiply them respectively by complementary subcarriers of the subcarriers of the SOFDM system, thereby modulating them onto complementary subcarriers of the multiple subcarriers of the SOFDM of this embodiment. In comparison with the SOFDM system in FIG. 4, square waves of the even-numbered subcarriers in the complementary SOFDM system in FIG. 5 are multiplied by -1. And the adder 502 adds up the data on the complementary subcarriers to obtain the complementary modulated data y' of the data to be transmitted failed in the detection.

In the SOFDM system in FIG. 5, the waveforms of complementary subcarriers may be represented as:

$$s_k\left(t\right) = \left(-1\right)^{k+1} \cdot \sqrt{\frac{1}{T}} e^{j2\pi f_k t}, \quad f_k = \frac{k}{2T}.$$

In the example in FIG. 5, modulating multiple modulation symbols of the data to be transmitted onto all subcarriers of the complementary subcarriers of the multiple subcarriers is taken as an example; however, similar to the example in FIG. 4, in this embodiment, multiple modulation symbols of the data to be transmitted may also be modulated onto a part of subcarriers of the complementary subcarriers of the multiple subcarriers.

In this embodiment, only the function modules at the transmitter end related to the implementation of the functions of this disclosure are described. However, this embodiment is not limited thereto. In a particular implementation, in order to implement transmission of data, the transmitter end may further include such functional modules as a modulating module, a serial-to-parallel conversion module, a digital-to-analog conversion module, and an RF module, etc. For details, reference may be made to the art related to the transmitter end.

With the multicarrier modulation apparatus of this embodiment, since the subcarrier spacing is halved, the spectrum efficiency may be improved.

Embodiment 2

This embodiment provides a multicarrier demodulation apparatus, applicable to a receiver end. Processing of this apparatus corresponds to that of the apparatus in Embodiment 1, with contents identical to those in Embodiment 1 being not going to be described herein any further.

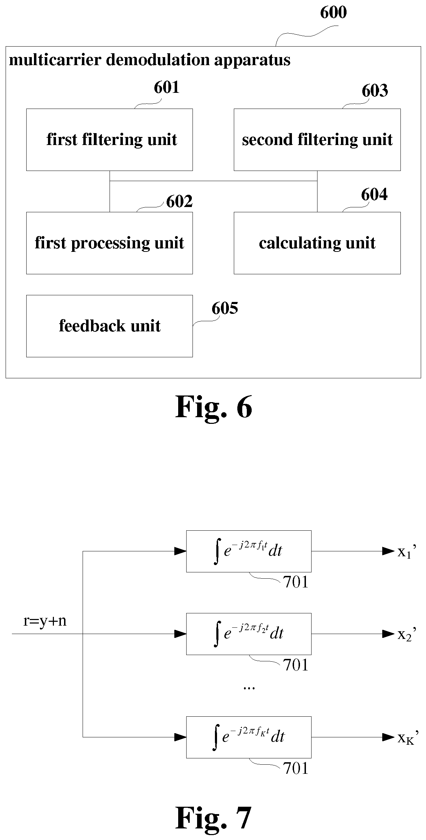

FIG. 6 is a schematic diagram of a structure of the multicarrier demodulation apparatus. As shown in FIG. 6, the multicarrier demodulation apparatus 600 includes a first filtering unit 601 and a first processing unit 602. The first filtering unit 601 is configured to filter first reception data, so as to obtain demodulated data to which subcarriers correspond; wherein, a subcarrier spacing between subcarriers of the multiple subcarriers is a reciprocal of a predefined multiple of a symbol duration, the predefined multiple being greater than 1. And the first processing unit 602 is configured to process the demodulated data to which the subcarriers correspond, so as to obtain demodulated data with no inter-subcarrier-interference.

In this embodiment, the predetermined multiple being two times is taken as an example. However, as described above, this embodiment is not limited thereto.

In this embodiment, the first reception data refer to data received from a receiver, which are a combination of the modulated data y of the data to be transmitted and a noise n, and are denoted by r=y+n. As described in Embodiment 1, the modulated data y are obtained by modulating the data to be transmitted onto all or part of subcarriers of the multiple subcarriers in this embodiment, and a subcarrier spacing between subcarriers of the multiple subcarriers in this embodiment is a reciprocal of two times of a symbol duration.

In this embodiment, the first filtering unit 601 may be implemented by multiple subcarrier matched filters (a subcarrier filter group). FIG. 7 is a schematic diagram of a receiver end of an SOFDM system of this embodiment. As shown in FIG. 7, for the received first reception data r, multiple subcarrier matched filters 701 perform matched filtering respectively on the subcarriers thereof, i.e., divide them respectively by the subcarriers, and finally perform integration thereon, so as to obtain demodulated data $x_1$'-$x_K$' (K is a total number of the subcarriers) corresponding to the subcarriers; here, 0<t<T.

In this embodiment, as described above, as the orthogonality between the subcarriers is broken, the subcarrier correlation coefficient may be defined as:

$$\rho\left(k_1,k_2\right)=\rho\left(\Delta k\right)=\int_0^T s_{k_1}\left(t\right)\cdot s_{k_2}^*\left(t\right)dt=\frac{1}{T}\int_0^T e^{j2\pi\left(k_1-k_2\right)\Delta ft}dt=\frac{1}{T}\int_0^T e^{j2\pi\Delta k\Delta ft}dt\ ;$$

where, $\Delta f=\dfrac{1}{2T}$, $\Delta k=k_1-k_2$, $k_1$ and $k_2$ are any two subcarriers of the multiple subcarriers.

After calculation, $\rho\left(\Delta k\right)=\dfrac{\sin\left(\pi\Delta k\right)}{\pi\Delta k}+j\cdot\dfrac{1-\cos\left(\pi\Delta k\right)}{\pi\Delta k}$; where, j is an imaginary root, and $j=\sqrt{-1}$.

In this embodiment, assuming that a noise is an AWGN (additive white Gaussian noise) and K is an even number, a result of the receiver after being performed subcarrier matched filtering may be expressed as:

$$\mathbf{x'}\triangleq\begin{bmatrix}x_1'\\x_2'\\\ldots\\x_K'\end{bmatrix}=\mathbf{R}\cdot\mathbf{x}+\mathbf{n}=\begin{bmatrix}1&j\cdot\dfrac{2}{\pi}&0&j\cdot\dfrac{2}{3\pi}&\ldots&j\cdot\dfrac{2}{(K-1)\pi}\\[6pt]-j\cdot\dfrac{2}{\pi}&1&j\cdot\dfrac{2}{\pi}&0&\ldots&0\\[6pt]0&-j\cdot\dfrac{2}{\pi}&1&&&\\[6pt]-j\cdot\dfrac{2}{3\pi}&0&&&&\\[6pt]\ldots&&-j\cdot\dfrac{2}{3\pi}&&&\\[6pt]-j\cdot\dfrac{2}{(K-1)\pi}&\ldots&&&&1\end{bmatrix}_{K\times K}\cdot\begin{bmatrix}x_1\\x_2\\x_3\\x_4\\\ldots\\x_K\end{bmatrix}+\mathbf{n}\ ;$$

where, x' is defined as a matrix of the demodulated data to which the subcarriers correspond, R is a subcarrier correlation matrix, x is a modulation symbol matrix of the data to be transmitted, and n is a noise term; elements of the subcarrier correlation matrix R are defined as $\mathbf{R}_{p,q}\triangleq\rho\left(p-q\right)$; where, p and q are a *p-th* row and a *q-th* column of the matrix R, $\rho(p-q)$ is a correlation coefficient between a *p-th* subcarrier and a *q-th* subcarrier, and $x_k$ is data carried by a subcarrier k, such as a QAM signal.

In this embodiment, it can be seen from the above results that the matrix x' of the demodulated data to which the subcarriers correspond is a sum of a product of the subcarrier correlation matrix R and the matrix x of the data carried on the subcarriers and the noise term n. And elements of the subcarrier correlation matrix are defined as:

$$\mathbf{R}_{i,j}\triangleq\rho\left(i-j\right).$$

In this embodiment, when the data $x_k$ carried on the multiple subcarriers is a real valued signal, such as a BPSK (binary phase shift keying) signal, and a PAM (pulse amplitude modulation) signal, or the like, the first processing unit 602 performs real-valued-part-only processing on the demodulated data to which the subcarriers correspond, so as to obtain demodulated data with no inter-subcarrier-interference. In this embodiment, the first processing unit 602 may be implemented by hardware, such as by a calculator, or may be implemented by software, and this embodiment is not limited thereto.

For example,

$$\hat{\mathbf{x}}=\mathrm{Re}\left(\mathbf{x'}\right)=\mathrm{Re}\left(\mathbf{R}\cdot\mathbf{x}\right)+\mathrm{Re}\left(\mathbf{n}\right)=\mathrm{Re}\left(\left(\mathbf{R}_I+j\cdot\mathbf{R}_Q\right)\cdot\mathbf{x}\right)+\mathrm{Re}\left(\mathbf{n}\right)=\mathbf{x}+\mathrm{Re}\left(\mathbf{n}\right)\ ;$$

where, $\mathbf{R}_I$ and $\mathbf{R}_Q$ are a real part and an imaginary part of the matrix R, respectively, $j=\sqrt{-1}$, and Re(·) is a real-valued-part-only operation. And in such a case, the SOFDM in this embodiment is an orthogonal system.

In this embodiment, when the data $x_k$ carried on the multiple subcarriers are complex valued signals, for example, a QPSK (quadrature phase shift keying) signal, and a 16QAM (quadrature amplitude modulation) signal, etc., the first processing unit 602 performs frequency-domain equalization processing on the demodulated data to which the subcarriers correspond to obtain demodulated data with no inter-subcarrier-interference. In this embodiment, the first processing unit 602 may be implemented by hardware, such as a calculator, or may be implemented by software, and this embodiment is not limited thereto.

In this embodiment, a detailed method of frequency domain equalization processing is not limited, and the following description shall be given by way of two examples.

In one implementation, the first processing unit 602 may perform linear equalization on the demodulated data to which the subcarriers correspond by using a zero forcing algorithm, so as to obtain the demodulated data with no inter-subcarrier-interference. For example, the demodulated data with no inter-subcarrier-interference may be obtained according to a formula as below:

$$\hat{\mathbf{x}} = \left(\mathbf{R}^H \cdot \mathbf{R}\right)^{-1} \cdot \mathbf{R}^H \cdot \mathbf{x}';$$

where, $\hat{x}$ is the demodulated data with no inter-subcarrier-interference, R is a subcarrier correlation matrix, which is a full rank matrix, $R^H$ is a conjugate transpose matrix of the subcarrier correlation matrix, and x' is a matrix of the demodulated data to which the subcarriers correspond. In this implementation, as described above, the first processing unit 602 may be implemented by software, and may also be implemented by hardware, such as a calculator.

In another implementation, the processing unit 602 may perform linear equalization on the demodulated data to which the subcarriers correspond by using a least mean square algorithm, so as to obtain the demodulated data with no inter-subcarrier-interference. For example, the demodulated data with no inter-subcarrier-interference may be obtained according to a formula as below:

$$\hat{\mathbf{x}} = \left(\mathbf{R}^H \cdot \mathbf{R} + \sigma^2 \cdot \mathbf{R}\right)^{-1} \cdot \mathbf{R}^H \cdot \mathbf{x}';$$

where, $\hat{x}$ is the demodulated data with no inter-subcarrier-interference, R is a subcarrier correlation matrix, which is a full rank matrix, $R^H$ is a conjugate transpose matrix of the subcarrier correlation matrix, $\sigma^2$ is white noise power, and x' is a matrix of the demodulated data to which the subcarriers correspond. In this implementation, as described above, the first processing unit 602 may be implemented by software, and may also be implemented by hardware, such as a calculator.

In this embodiment, the matrix R is a full rank matrix, and whether it is a full rank matrix is related to the total number of the subcarriers. In this embodiment, when the matrix R is not a full rank matrix, m null subcarriers may be provided, that is, subcarriers carrying data symbols of 0, so that it satisfies $K\text{-}m=\text{Rank}(\mathbf{R}_{K \times K})$, thus an effective correlation matrix **R**' is formed and taken as the above matrix R; wherein, a dimension of the effective correlation matrix **R**' is $K \times (K\text{-}m)$.

In another implementation of this embodiment, as shown in FIG 6, the apparatus 600 may further include a second filtering unit 603 and a calculating unit 604. The second filtering unit 603 is configured to filter second reception data, so as to obtain complementary demodulated data to which the subcarriers correspond. And the calculating unit 604 is configured to add up the demodulated data obtained by the first filtering unit 601 and the complementary demodulated data obtained by the second filtering unit 603, so as to obtain subcarrier data with no interference.

In this embodiment, it may be found through observation that $\mathbf{R}+\mathbf{R}^T = \mathbf{R}+\mathbf{R}^* = 2 \cdot \mathbf{I}$; where, R is the above-described subcarrier correlation matrix, $R^T$ is a non-conjugate transpose of the matrix R, R* is a conjugate of the matrix R, and I is a unit matrix. It can be seen that when a multicarrier signal with a correlation characteristic of $R^T$ can be constructed, complementary signals of the SOFDM system may be found, and by adding up the signals of them after the subcarrier filter group of the receiver, the multicarrier system with no inter-subcarrier-interference may be constructed. The two original and complementary SOFDM signals are orthogonal in the time domain or in the frequency domain.

In this embodiment, the second reception data refer to the aforementioned complementary modulated data (complementary signals), and the second filtering unit 603 performs filtering operation on the complementary modulated data to obtain complementary demodulated data to which the subcarriers correspond.

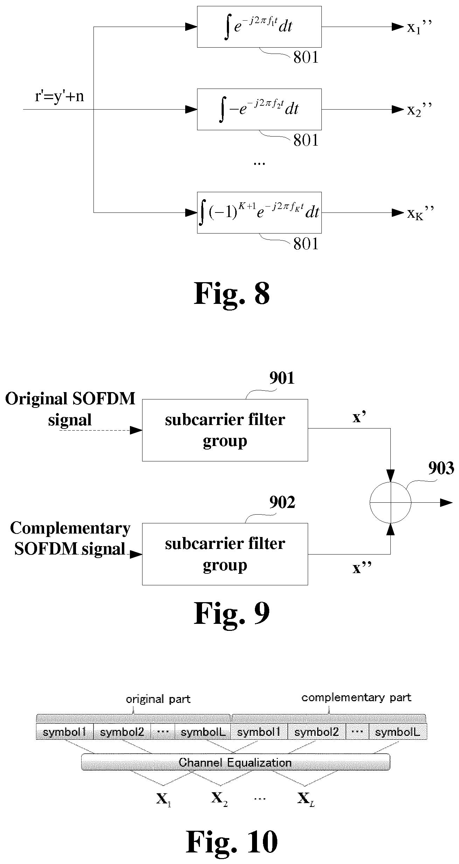

In this embodiment, the second filtering unit 603 may also be implemented by multiple subcarrier matched filters (a subcarrier filter group). FIG. 8 is a schematic diagram of a receiver end of a complementary SOFDM system of this embodiment. As shown in FIG. 8, for the received complementary modulated data r', multiple subcarrier matched filters 801 divides them by the subcarriers of the complementary subcarrier and then perform integration on them to obtain the complementary demodulated data $x_1''\text{-}x_K''$ to which the subcarriers correspond.

In this embodiment, the calculating unit 604 adds up the demodulated data obtained by the first filtering unit 601 and the complementary demodulated data obtained by the second filtering unit 603 to obtain subcarrier data with no interference. In this embodiment, the calculating unit 604 may be implemented by an adder.

FIG. 9 is a schematic diagram of data demodulation using the complementary SOFDM signals. As shown in FIG. 9, the original SOFDM signal refers to a signal that is transmitted after the data to be transmitted are modulated by the first modulating unit 101 and the first calculating unit 102, and the complementary SOFDM signal refers to a signal that is transmitted after the data to be transmitted are modulated by the second modulating unit 103 and the second calculating unit 104. At the receiver end, multiple subcarrier matched filters (a subcarrier filter group) 901 are used to filter the original SOFDM signal to obtain a received signal x'; where, $x' = R \cdot x + n'$, R being a subcarrier correlation matrix, x is a data to be transmitted, n' is interference (noise) experienced by the original SOFDM signal during transmission; multiple subcarrier matched filters (a subcarrier filter group) 902 are used to filter the complementary SOFDM signal to obtain a received signal x", $x'' = R^T \cdot x + n''$, $R^T$ being the non-conjugate transpose of the matrix R, x being a data to be transmitted, and n" being interference (noise) experienced by the complementary SOFDM signal during transmission. In this embodiment, an adder 903 is used to add up the received signal of the original SOFDM signal and the received signal of the complementary SOFDM signal to obtain the subcarrier data with no interference.

That is,

$$\begin{cases} \mathbf{x}^{'} = \mathbf{R} \cdot \mathbf{x} + \mathbf{n}^{'} \\ \mathbf{x}^{''} = \mathbf{R}^{T} \cdot \mathbf{x} + \mathbf{n}^{''} \end{cases} \Rightarrow \mathbf{x}^{'} + \mathbf{x}^{''} = \left( \mathbf{R} + \mathbf{R}^{T} \right) \cdot \mathbf{x} + \mathbf{n}^{'} + \mathbf{n}^{''} = 2 \cdot \mathbf{x} + \mathbf{n} \ .$$

FIG. 10 is a schematic diagram of a time-domain complementary SOFDM system. As shown in FIG. 10, a symbol 1 to a symbol L are data to be transmitted, the received signal to which the original SOFDM corresponds and the received signal to which the complementary SOFDM corresponds are added up to obtain data $X_1$-$X_L$ of the data to be transmitted with no inter-subcarrier-interference.

In a further implementation of this embodiment, as shown in FIG 6, the multicarrier demodulation apparatus 600 may further include a feedback unit 605 configured to, when detection of a certain data to be transmitted fails, transmit information on failure of the detection of the data to be transmitted to a transmitter. In this implementation, when the second reception data is received, the second filtering unit 603 filters the second reception data, so as to obtain the complementary demodulated data to which the subcarriers correspond. In this implementation, the feedback unit 605 may be implemented by hardware or software, such as by a feedback module.

In this embodiment, the complementary SOFDM signal is transmitted only when the original SOFDM signal fails in detection. After detection of each original SOFDM signal, the receiver may feed back signaling of whether the detection is successful to the transmitter, and the transmitter may decide whether to transmit the complementary signal of the current SOFDM according to the signaling. When the signaling indicates that the detection is successful, the transmitter transmits no complementary signal any longer, hence, a new signal may be transmitted at a current time period.

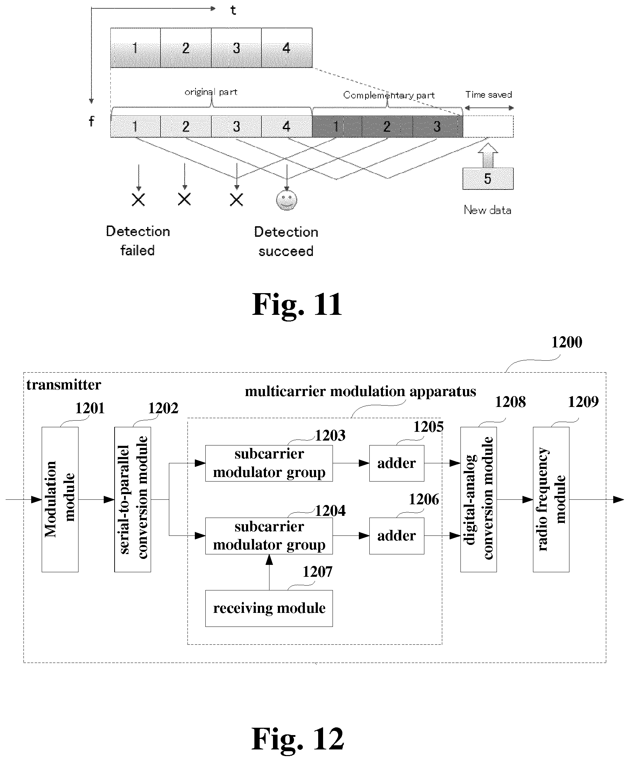

FIG. 11 is a schematic diagram of data reception and transmission of this implementation. As shown in FIG. 11, for a group of data 1, 2, 3 and 4 to be transmitted, the former three fail in detection, the last one succeeds in detection, and the transmitter transmits complementary SOFDM signals of the former three. Thus, at the receiver end, the demodulated signals of data 1, 2 and 3 (obtained by the first filtering unit 601) and the complementary demodulated signals (obtained by the second filtering unit 603) may be added up by using the calculating unit 604, so as to obtain respective subcarrier data with no inter-subcarrier-interference.

In this implementation, the demodulated data obtained by the first processing unit 602 are detected. If the detection is successful, information on the successful detection is fed back (or it may not be fed back), and the next demodulated data are detected; when the detection fails, information on the failed detection is fed back, so that the transmitter transmits complementary SOFDM signals of the data to be transmitted that have failed in detection, so that the calculating unit 604 may add up the demodulated signal of the data to be transmitted that have failed in detection (the demodulated data obtained by the first filtering unit 601) and the complementary demodulated signal (the complementary demodulated signal obtained by the second filtering unit 603) to obtain data with no inter-subcarrier-interference.

In this embodiment, only the function modules at the receiver end related to the implementation of the functions of this disclosure are described. However, this embodiment is not limited thereto. In a particular implementation, in order to implement reception of data, the receiver end may further include such functional modules as a channel equalizing module and a parallel-to-serial conversion module, etc. For details, reference may be made to the art related to the receiver end.

With the multicarrier demodulation apparatus of this embodiment, since the subcarrier spacing is halved, the spectrum efficiency may be improved.

Embodiment 3

This embodiment provides a transmitter.

FIG. 12 is a schematic diagram of a hardware structure of the transmitter 1200 of this embodiment. As shown in FIG. 12, the transmitter 1200 includes a modulation module 1201, a serial-to-parallel conversion module 1202, subcarrier modulator groups 1203 and 1204, adders 1205 and 1206, a receiving module 1207, a digital-analog conversion module 1208, and a radio frequency module 1209. It should be noted that this figure is illustrative only, and other types of structures may also be used to supplement or replace the structure to implement telecommunications functions or other functions.

In this embodiment, the related art may be referred to for functions of the modulation module 1201, the serial-to-parallel conversion module 1202, the digital-analog conversion module 1208 and the radio frequency module 1209. And the subcarrier modulator groups 1203 and 1204, the adders 1205 and 1206 and the receiving module 1207 together constitute the multicarrier modulation apparatus, which may be implemented by the multicarrier modulation apparatus of Embodiment 1, the contents of which being incorporated herein, and being not going to be described herein any further.

It should be noted that the transmitter 1200 does not necessarily include all the components shown in FIG. 12; moreover, the transmitter 1200 may include components not shown in FIG. 12, and reference may be made to the related art.

With the transmitter of this embodiment, spectral efficiency may be improved.

Embodiment 4

This embodiment provides a receiver.

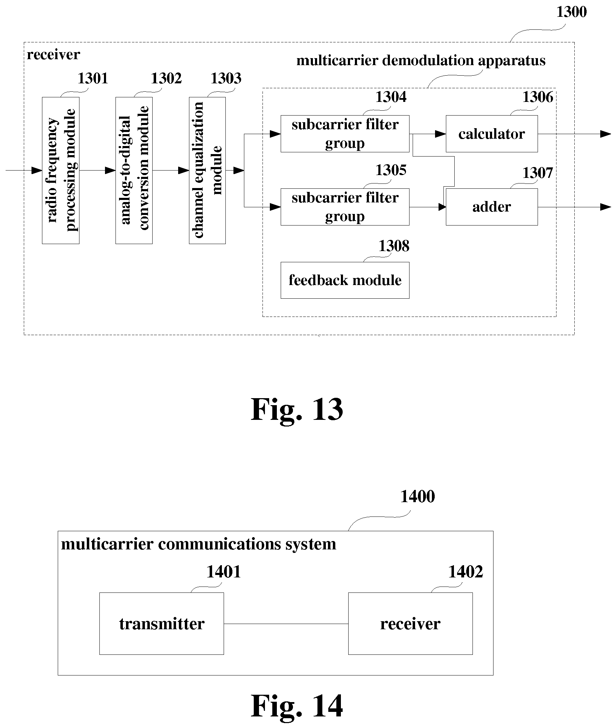

FIG. 13 is a schematic diagram of a systematic structure of the receiver 1300 of this embodiment. As shown in FIG. 13, the receiver 1300 may include a radio frequency processing module 1301, an analog-to-digital conversion module 1302, a channel equalization module 1303, subcarrier filter groups 1304 and 1305, a calculator 1306, an adder 1307 and a feedback module 1308. It should be noted that this figure is illustrative only, and other types of structures may also be used to supplement or replace the structure to implement telecommunications functions or other functions.

In this embodiment, the related art may be referred to for functions of the radio frequency processing module 1301, the analog-to-digital conversion module 1302, and the channel equalization module 1303. And the subcarrier filter groups 1304 and 1305, the calculator 1306, the adder 1307 and the feedback module 1308 together constitute a multicarrier demodulation apparatus, which may be implemented by the multicarrier demodulation apparatus of Embodiment 2, the contents of which being incorporated herein, and being not going to be described herein any further.

It should be noted that the receiver 1300 does not necessarily include all the components shown in FIG. 13; moreover, the receiver 1300 may include components not shown in FIG. 13, and reference may be made to the related art.

With the receiver of this embodiment, spectral efficiency may be improved.

Embodiment 5

This embodiment provides a multicarrier communications system.

FIG. 14 is a schematic diagram of a structure of the multicarrier communications system of an embodiment. As shown in FIG. 14, the communications system 1400 includes a transmitter 1401 and a receiver 1402.

In this embodiment, the transmitter 1401 is configured to: modulate multiple modulation symbols of data to be transmitted onto part or all of subcarriers of multiple subcarriers, and add up data on the subcarriers, so as to obtain modulated data of the data to be transmitted; wherein, a subcarrier spacing between subcarriers of the multiple subcarriers is a reciprocal of a predefined multiple of a symbol duration, the predefined multiple being greater than 1, such as two times. The transmitter 1401 may be implemented by the transmitter 1200 in Embodiment 3, the contents of which being incorporated herein, and being not going to be described herein any further.

In this embodiment, the receiver 1402 is configured to: filter first reception data, so as to obtain demodulated data to which subcarriers correspond, and process the demodulated data to which the subcarriers correspond, so as to obtain demodulated data with no inter-subcarrier-interference; wherein, a subcarrier spacing between subcarriers of the multiple subcarriers is a reciprocal of a predefined multiple of a symbol duration, the predefined multiple being greater than 1, such as two times. The receiver 1402 may be implemented by the receiver 1300 in Embodiment 4, the contents of which being incorporated herein, and being not going to be described herein any further.

With the multicarrier communications system of this embodiment, spectral efficiency may be improved.

Embodiment 6

This embodiment provides a multicarrier modulation method. As principles of the method for solving problems are similar to that of the apparatus in Embodiment 1, the implantation of the apparatus in Embodiment 1 may be referred to for implementation of the method, with identical contents being not going to be described herein any further.

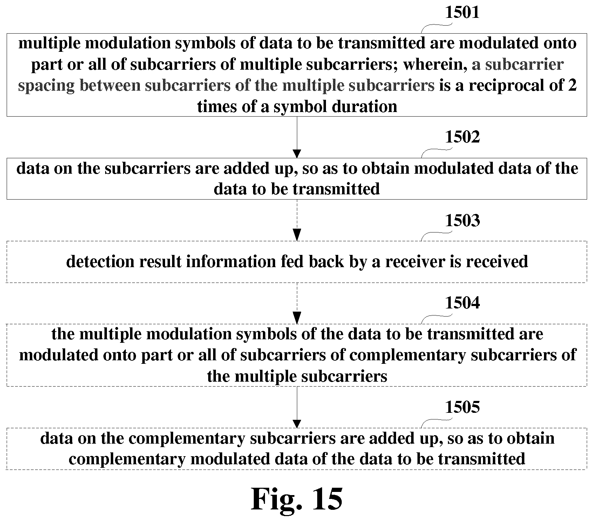

FIG 15 is a flowchart of the method. As shown in FIG. 15, the method includes:

step 1501: multiple modulation symbols of data to be transmitted are modulated onto part or all of subcarriers of multiple subcarriers; wherein, a subcarrier spacing between subcarriers of the multiple subcarriers is a reciprocal of a predefined multiple of a symbol duration, the predefined multiple being greater than 1; and

step 1502: data on the subcarriers are added up, so as to obtain modulated data of the data to be transmitted.

In this embodiment, the predefined multiple is two times, odd-numbered subcarriers of the multiple subcarriers are orthogonal to each other, and even-numbered subcarriers of the multiple subcarriers are orthogonal to each other.

In this embodiment, the part of subcarriers include basic subcarriers and a part of backup subcarriers of the multiple subcarriers. In this embodiment, the basic subcarrier may be odd-numbered subcarriers of the multiple subcarriers, and the backup subcarriers are even-numbered subcarriers of the multiple subcarriers. Alternatively, the basic subcarriers may be even-numbered subcarriers of the multiple subcarriers, and the backup subcarriers are odd-numbered subcarriers of the multiple subcarriers.

In one implementation of this embodiment, as shown in FIG. 15, the method may further include:

step 1504: the multiple modulation symbols of the data to be transmitted are modulated onto part or all of subcarriers of complementary subcarriers of the multiple subcarriers; and

step 1505: data on the complementary subcarriers are added up, so as to obtain complementary modulated data of the data to be transmitted.

In another implementation of this embodiment, as shown in FIG. 15, the method may further include:

step 1503: detection result information fed back by a receiver is received.

In this implementation, when the detection result is that the detection fails, the above steps 1504 and 1505 are executed.

With the method of this embodiment, spectral efficiency may be improved.

Embodiment 7

This embodiment provides a multicarrier demodulation method. As principles of the method for solving problems are similar to that of the apparatus in Embodiment 2, the implantation of the apparatus in Embodiment 2 may be referred to for implementation of the method, with identical contents being not going to be described herein any further.

FIG 13 is a flowchart of the method. As shown in FIG. 13, the method includes:

step 1601: first reception data are filtered, so as to obtain demodulated data to which subcarriers correspond; wherein, a subcarrier spacing between subcarriers of the multiple subcarriers is a reciprocal of a predefined multiple of a symbol duration, the predefined multiple being greater than 1; and

step 1602: the demodulated data to which the subcarriers correspond are processed, so as to obtain demodulated data with no inter-subcarrier-interference.

In this embodiment, the predetermined multiple is two times.

In this embodiment, the first reception data refer to SOFDM signals of the data to be transmitted, with details being as described above.

In this embodiment, a matrix of the demodulated data to which the subcarriers correspond is a sum of a product of a subcarrier correlation matrix and a matrix of data carried by the subcarriers and a noise term. In this embodiment, elements of the subcarrier correlation matrix may be defined as

$$\mathbf{R}_{p,q} \triangleq \rho(p-q);$$

where, p and q are rows and columns of the matrix, respectively, and $\rho(p\text{-}q)$ is a correlation coefficient

$\rho(\Delta k) = \dfrac{\sin(\pi\Delta k)}{\pi\Delta k} + j \cdot \dfrac{1-\cos(\pi\Delta k)}{\pi\Delta k}$ of a *p-th* subcarrier and a *q-th* subcarrier, $\Delta k = p\text{-}q,$ j being an imaginary root, and $j = \sqrt{-1}$ .

In this embodiment, when the data carried on the multiple subcarriers are real valued signals, in step 1602, real-part taking processing may be performed on the demodulated data to which the subcarriers correspond, so as to obtain demodulated data with no inter-subcarrier-interference.

In this embodiment, when the data carried on the multiple subcarriers are complex valued signals, in step 1602, frequency-domain equalization processing may be performed on the demodulated data to which the subcarriers correspond, so as to obtain demodulated data with no inter-subcarrier-interference.

In one implementation of step 1602, linear equalization may be performed on the demodulated data to which the subcarriers correspond by using a zero forcing algorithm, so as to obtain the demodulated data with no inter-subcarrier-interference. For example, the demodulated data with no inter-subcarrier-interference may be obtained by using a formula as below:

$$\hat{\mathbf{x}} = \left( \mathbf{R}^{\mathrm{H}} \cdot \mathbf{R} \right)^{-1} \cdot \mathbf{R}^{\mathrm{H}} \cdot \mathbf{x}';$$

where, R is a subcarrier correlation matrix, which is a full rank matrix, $R^H$ is a conjugate transpose matrix of the subcarrier correlation matrix, and x' is a matrix of the demodulated data to which the subcarriers correspond.

In another implementation of step 1602, linear equalization may be performed on the demodulated data to which the subcarriers correspond by using a least mean square algorithm, so as to obtain the demodulated data with no inter-subcarrier-interference. For example, the demodulated data with no inter-subcarrier-interference may be obtained by using a formula as below:

$$\hat{\mathbf{x}} = \left( \mathbf{R}^{\mathrm{H}} \cdot \mathbf{R} + \sigma^2 \cdot \mathbf{R} \right)^{-1} \cdot \mathbf{R}^{\mathrm{H}} \cdot \mathbf{x}';$$

where, R is a subcarrier correlation matrix, which is a full rank matrix, $R^H$ is a conjugate transpose matrix of the subcarrier correlation matrix, $\sigma^2$ is white noise power, and x' is a matrix of the demodulated data to which the subcarriers correspond.

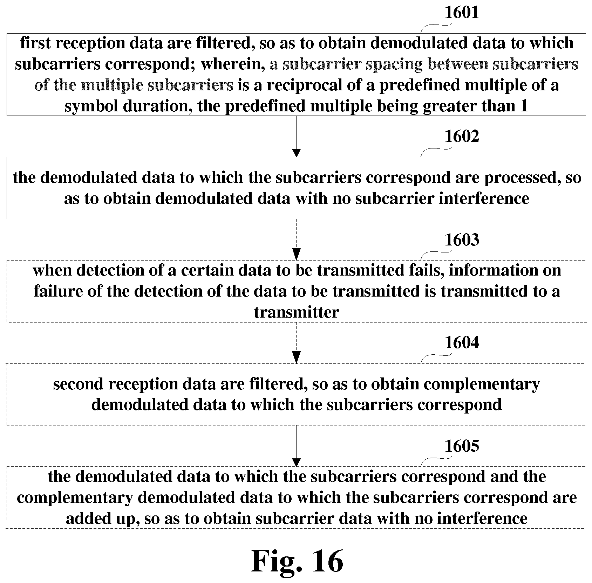

In another implementation of this embodiment, as shown in FIG 16, the method may further include:

step 1604: second reception data are filtered, so as to obtain complementary demodulated data to which the subcarriers correspond; and
step 1605: the demodulated data to which the subcarriers correspond and the complementary demodulated data to which the subcarriers correspond are added up, so as to obtain subcarrier data with no interference.

In this implementation, the second reception data refer to complementary SOFDM signals of the data to be transmitted that have failed in detection, with details being as described above.

In a further implementation of this embodiment, as shown in FIG. 16, the method may further include:
step 1603: when detection of a certain data to be transmitted fails, information on failure of the detection of the data to be transmitted is transmitted to a transmitter.

In this implementation, by transmitting the detection failure information to the transmitter, the transmitter is made to transmit the complementary SOFDM signals of the data to be transmitted that have failed in detection. Hence, the subcarrier data with no inter-subcarrier-interference of the data to be transmitted that have failed in detection may be obtained by executing step 1604 and step 1605.

An embodiment of the present disclosure provides a computer readable program, which, when executed in a multicarrier modulation apparatus or a transmitter, will cause a computer to carry out the method as described in Embodiment 6 in the multicarrier modulation apparatus or the transmitter.

An embodiment of the present disclosure provides a computer storage medium, including a computer readable program, which will cause a computer to carry out the method as described in Embodiment 6 in a multicarrier modulation apparatus or a transmitter.

An embodiment of the present disclosure provides a computer readable program, which, when executed in a multicarrier demodulation apparatus or a receiver, will cause a computer to carry out the method as described in Embodiment 7 in the multicarrier demodulation apparatus or the receiver.

An embodiment of the present disclosure provides a computer storage medium, including a computer readable program, which will cause computer to carry out the method as described in Embodiment 7 in a multicarrier demodulation apparatus or a receiver.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

**Claims**

1. A multicarrier modulation apparatus, comprising:

   a first modulating unit configured to modulate multiple modulation symbols of data to be transmitted onto part or all of subcarriers of multiple subcarriers; wherein, a subcarrier spacing between subcarriers of the multiple subcarriers is a reciprocal of a predefined multiple of a symbol duration, the predefined multiple being greater than 1; and
   a first calculating unit configured to add up data on the subcarriers to obtain modulated data of the data to be transmitted.

2. The apparatus according to claim 1, wherein the predefined multiple is 2 times.

3. The apparatus according to claim 2, wherein odd-numbered subcarriers of the multiple subcarriers are orthogonal to each other, and even-numbered subcarriers of the multiple subcarriers are orthogonal to each other.

4. The apparatus according to claim 2, wherein the part of the subcarriers comprise basic subcarriers and part of backup subcarriers of the multiple subcarriers.

5. The apparatus according to claim 4, wherein the basic subcarriers are the odd-numbered subcarriers of the multiple subcarriers, and the backup subcarriers are the even-numbered subcarriers of the multiple subcarriers.

6. The apparatus according to claim 4, wherein the basic subcarriers are the even-numbered subcarriers of the multiple subcarriers, and the backup subcarriers are the odd-numbered subcarriers of the multiple subcarriers.

7. The apparatus according to claim 2, wherein the apparatus further comprises:

   a second modulating unit configured to modulate the multiple modulation symbols of the data to be transmitted onto part or all of subcarriers of complementary subcarriers of the multiple subcarriers; and
   a second calculating unit configured to add up data on the complementary subcarriers to obtain complementary modulated data of the data to be transmitted.

8. The apparatus according to claim 7, wherein the apparatus further comprises:

   a receiving unit configured to receive detection result information fed back by a receiver;
   and when the receiving unit receives information on failure of detection of a certain data to be transmitted, the second modulating unit modulates the multiple modulation symbols of the data to be transmitted onto part or all of subcarriers of the complementary subcarriers of the multiple subcarriers, and the second calculating unit adds up the data on the complementary subcarriers to obtain the complementary modulated data of the data to be transmitted.

9. A multicarrier demodulation apparatus, comprising:

   a first filtering unit configured to filter first reception data to obtain demodulated data to which subcarriers correspond; wherein, a subcarrier spacing between subcarriers of the multiple subcarriers is a reciprocal of a predefined multiple of a symbol duration, the predefined multiple being greater than 1; and
   a first processing unit configured to process the demodulated data to which the subcarriers correspond to obtain demodulated data with no inter-subcarrier-interference.

10. The apparatus according to claim 9, wherein the predefined multiple is 2 times.

11. The apparatus according to claim 10, wherein a matrix of the demodulated data to which the subcarriers correspond is a sum of a product of a subcarrier correlation matrix and a matrix of data carried by the subcarriers and a noise term.

12. The apparatus according to claim 11, wherein elements of the subcarrier correlation matrix are defined as $\mathbf{R}_{p,q} \triangleq \rho(p-q)$; where, p and q are rows and columns of the matrix, respectively, and $\rho(p\text{-}q)$ is a correlation coefficient $\rho(\Delta k) = \dfrac{\sin(\pi\Delta k)}{\pi\Delta k} + j \cdot \dfrac{1-\cos(\pi\Delta k)}{\pi\Delta k}$ of a *p-th* subcarrier and a *q-th* subcarrier, $\Delta k = p\text{-}q$, j being an imaginary root, and $j = \sqrt{-1}$.

13. The apparatus according to claim 10, wherein when the data carried by the multiple subcarriers are real signals, the first processing unit performs real-valued-part-only processing on the demodulated data to which the subcarriers correspond to obtain the demodulated data with no inter-subcarrier-interference.

14. The apparatus according to claim 10, wherein when the data carried by the multiple subcarriers are complex signals, the first processing unit performs frequency-domain equalization processing on the demodulated data to which the subcarriers correspond to obtain the demodulated data with no inter-subcarrier-interference.

15. The apparatus according to claim 14, wherein the first processing unit performs linear equalization on the demodulated data to which the subcarriers correspond by using a zero forcing algorithm to obtain the demodulated data with no inter-subcarrier-interference as below:

$$\hat{\mathbf{x}} = \left(\mathbf{R}^{H} \cdot \mathbf{R}\right)^{-1} \cdot \mathbf{R}^{H} \cdot \mathbf{x}';$$

where, R is a subcarrier correlation matrix, which is a full rank matrix, R$^H$ is a conjugate transpose matrix of the subcarrier correlation matrix, and x' is a matrix of the demodulated data to which the subcarriers correspond.

16. The apparatus according to claim 14, wherein the first processing unit performs linear equalization on the demodulated data to which the subcarriers correspond by using a least mean square algorithm to obtain the demodulated data with no inter-subcarrier-interference as below:

$$\hat{\mathbf{x}} = \left(\mathbf{R}^{H} \cdot \mathbf{R} + \sigma^2 \cdot \mathbf{R}\right)^{-1} \cdot \mathbf{R}^{H} \cdot \mathbf{x}';$$

where, R is a subcarrier correlation matrix, which is a full rank matrix, R$^H$ is a conjugate transpose matrix of the subcarrier correlation matrix, $\sigma^2$ is white noise power, and x' is a matrix of the demodulated data to which the subcarriers correspond.

17. The apparatus according to claim 10, wherein the apparatus further comprises:

a second filtering unit configured to filter second reception data to obtain complementary demodulated data to which the subcarriers correspond; and
a calculating unit configured to add up the demodulated data obtained by the first filtering unit and the complementary demodulated data obtained by the second filtering unit to obtain subcarrier data with no interference.

18. The apparatus according to claim 17, wherein the apparatus further comprises:

a feedback unit configured to, when detection of a certain data to be transmitted fails, transmit information on failure of the detection of the data to be transmitted to a transmitter;
and when the second reception data is received, the second filtering unit filters the second reception data to obtain the complementary demodulated data to which the subcarriers correspond.

19. A multicarrier communications system, comprising a transmitter and a receiver; wherein,
the transmitter is configured to:

modulate multiple modulation symbols of data to be transmitted onto part or all of subcarriers of multiple subcarriers, and add up data on the subcarriers to obtain modulated data of the data to be transmitted; wherein, a subcarrier spacing between subcarriers of the multiple subcarriers is a reciprocal of a predefined multiple of a symbol duration, the predefined multiple being greater than 1;
and the receiver is configured to:
filter first reception data to obtain demodulated data to which subcarriers correspond, and process the demodulated data to which the subcarriers correspond to obtain demodulated data with no inter-subcarrier-interference.

**20.** The system according to claim 10, wherein the predefined multiple is 2 times.

100

multicarrier modulation apparatus

105

receiving unit

101

first modulating unit

103

second modulating
unit

102

first calculating unit

104

second calculating
unit

**Fig. 1**

OFDM

**Fig. 2**

SOFDM

**Fig. 3**

402

$x_1$ → | $e^{j2\pi f_1 t}$ | → 
401

$x_2$ → | $e^{j2\pi f_2 t}$ | →
401

...

$x_K$ → | $e^{j2\pi f_K t}$ | →
401

$\Sigma$ → y

## Fig. 4

502

$x_1$ → | $e^{j2\pi f_1 t}$ | →
501

$x_2$ → | $-e^{j2\pi f_2 t}$ | →
501

...

$x_K$ → | $(-1)^{K+1} e^{j2\pi f_K t}$ | →
501

$\Sigma$ → y'

## Fig. 5

**600**

multicarrier demodulation apparatus

**601**

first filtering unit

**603**

second filtering unit

**602**

first processing unit

**604**

calculating unit

**605**

feedback unit

# Fig. 6

$r = y + n$

$$\int e^{-j2\pi f_1 t} dt$$

701

$\to x_1$'

$$\int e^{-j2\pi f_2 t} dt$$

701

$\to x_2$'

...

$$\int e^{-j2\pi f_K t} dt$$

701

$\to x_K$'

# Fig. 7

$$\int e^{-j2\pi f_1 t} dt \quad \longrightarrow \quad x_1''$$

801

$$\int -e^{-j2\pi f_2 t} dt \quad \longrightarrow \quad x_2''$$

801

...

$$\int (-1)^{K+1} e^{-j2\pi f_K t} dt \quad \longrightarrow \quad x_K''$$

801

r'=y'+n

**Fig. 8**

901

Original SOFDM signal → subcarrier filter group → x'

903

902

Complementary SOFDM signal → subcarrier filter group → x''

**Fig. 9**

original part | complementary part

symbol1 | symbol2 | ··· | symbolL | symbol1 | symbol2 | ··· | symbolL

Channel Equalization

$X_1$ $X_2$ ··· $X_L$

**Fig. 10**

**Fig. 11**

**Fig. 12**

**1300**

receiver

multicarrier demodulation apparatus

**1301**     **1302**     **1303**

radio frequency processing module

analog-to-digital conversion module

channel equalization module

**1304**        **1306**

subcarrier filter group

calculator

**1305**        **1307**

subcarrier filter group

adder

**1308**

feedback module

# Fig. 13

**1400**

multicarrier communications system

**1401**             **1402**

transmitter

receiver

# Fig. 14

1501

multiple modulation symbols of data to be transmitted are modulated onto part or all of subcarriers of multiple subcarriers; wherein, a subcarrier spacing between subcarriers of the multiple subcarriers is a reciprocal of 2 times of a symbol duration

1502

data on the subcarriers are added up, so as to obtain modulated data of the data to be transmitted

1503

detection result information fed back by a receiver is received

1504

the multiple modulation symbols of the data to be transmitted are modulated onto part or all of subcarriers of complementary subcarriers of the multiple subcarriers

1505

data on the complementary subcarriers are added up, so as to obtain complementary modulated data of the data to be transmitted

# Fig. 15

1601

first reception data are filtered, so as to obtain demodulated data to which subcarriers correspond; wherein, a subcarrier spacing between subcarriers of the multiple subcarriers is a reciprocal of a predefined multiple of a symbol duration, the predefined multiple being greater than 1

1602

the demodulated data to which the subcarriers correspond are processed, so as to obtain demodulated data with no subcarrier interference

1603

when detection of a certain data to be transmitted fails, information on failure of the detection of the data to be transmitted is transmitted to a transmitter

1604

second reception data are filtered, so as to obtain complementary demodulated data to which the subcarriers correspond

1605

the demodulated data to which the subcarriers correspond and the complementary demodulated data to which the subcarriers correspond are added up, so as to obtain subcarrier data with no interference

# Fig. 16

# INTERNATIONAL SEARCH REPORT

| International application No. |
|---|
| PCT/CN2015/093371 |

**A. CLASSIFICATION OF SUBJECT MATTER**

H04L 27/26 (2006.01) i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

SIPOABS, CNABS, CNKI, VEN: modulate, carrier, symbol, duration, interval, spacing, multiple, odd, even, number, reciprocal, orthogonal, backup, slave

**C. DOCUMENTS CONSIDERED TO BE RELEVANT**

| Category* | Citation of document, with indication, where appropriate, of the relevant passages | Relevant to claim No. |
|---|---|---|
| A | CN 101855880 A (ZTE USA INCORPORATED) 06 October 2010 (06.10.2010) the whole document | 1-20 |
| A | CN 1893337 A (TSINGHUA UNIVERSITY) 10 January 2007 (10.01.2007) the whole document | 1-20 |
| A | US 2007274252 A1 (NORTEL NETWORKS LTD.) 29 November 2007 (29.11.2007) the whole document | 1-20 |
| A | EP 1041763 A2 (FUJITSU LTD.) 04 October 2000 (04.10.2000) the whole document | 1-20 |

☐ Further documents are listed in the continuation of Box C.　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
|---|---|
| 14 July 2016 | 25 July 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>PAN, Bin<br><br>Telephone No. (86-10) 62412162 |

Form PCT/ISA /210 (second sheet) (July 2009)

## INTERNATIONAL SEARCH REPORT
Information on patent family members

| International application No. |
| --- |
| PCT/CN2015/093371 |

| Patent Documents referred in the Report | Publication Date | Patent Family | Publication Date |
| --- | --- | --- | --- |
| CN 101855880 A | 06 October 2010 | AU 2008312350 A1 | 23 April 2009 |
| | | CA 2702444 A1 | 23 April 2009 |
| | | JP 2011502386 A | 20 January 2011 |
| | | EP 2210383 A2 | 28 July 2010 |
| | | WO 2009052420 A2 | 23 April 2009 |
| | | WO 2009052420 A3 | 11 June 2009 |
| | | EP 2210383 A4 | 12 September 2012 |
| | | BR PI0818547 A2 | 16 June 2015 |
| | | KR 20100075642 A | 02 July 2010 |
| | | MX 2010004141 A | 10 August 2010 |
| | | IL 205026 D0 | 30 November 2010 |
| | | AU 2008312350 B2 | 19 September 2013 |
| CN 1893337 A | 10 January 2007 | CN 100553187 C | 21 October 2009 |
| US 2007274252 A1 | 29 November 2007 | US 7623487 B2 | 24 November 2009 |
| EP 1041763 A2 | 04 October 2000 | US 6665831 B1 | 16 December 2003 |
| | | DE 60028441 D1 | 20 July 2006 |
| | | JP 2000286818 A | 13 October 2000 |
| | | EP 1041763 A3 | 11 September 2002 |
| | | DE 60028441 T2 | 04 January 2007 |
| | | EP 1041763 B1 | 07 June 2006 |
| | | JP 3728578 B2 | 21 December 2005 |

Form PCT/ISA /210 (patent family annex) (July 2009)